# EUROPEAN PATENT APPLICATION

(11) **EP 4 272 886 A1**
(43) Date of publication of application: **08.11.2023**
(21) Application number: 22890514.7
(22) Date of filing: 08.11.2022
(51) Int. Cl.: B21H 1/14, C21D 9/36, C21D 1/02, B23P 15/00

(54) **METHOD OF MANUFACTURING SPHERICAL METAL ARTICLES**

(30) Priority: 08.11.2021 RU 2021132539
(71) Applicant: Obshchestvo S Ogranichennoy Otvetstvennostyu "NPP Sistema 48", Lipeck, 398001 (RU)
(72) Inventor: TITOV, Sergey Sergeevich, Lipeck, 398001 (RU); BEZDENEZHNYH, Daniil Vladimirovich, Lipeck, 398058 (RU); KOVALENKO, Oleg Anatolevich, Lipeck, 398016 (RU)
(74) Representative: Zanettin, Gianluigi
(86) International application number: PCT/RU2022/050354
(87) International publication number: WO 2023/080811

(57) **Abstract**

The invention refers to the manufacturing of ball-shaped metal products. The method consists in through heating of round billets made in appropriate size in a mid-frequency induction unit, rolling such billets into balls in a cross rolling mill at 950°C-1070°C, cooling the balls down to 620°C-700°C in a cooling drum with forced air cooling, heating the surface of the balls up to 850°C-930°C in a high-frequency induction unit containing a rotating transport tube and multiple inductor sections, quenching the balls to 125°C-160°C in a quenching drum where they are cooled by running water, and allowing the balls to self-temper in the containers.The method enables better wear and impact resistance of metal balls when they are made of low-alloy steels, thereby allowing to reduce the carbon mass fraction of the used steel.

## Description

A method known for manufacturing ball-shaped metal products (hereinafter, "balls") from low-alloy ball-shaped graphite cast iron involves melting cast iron, casting bars, rolling them on a cross rolling mill, performing isothermal quenching followed by tempering at 280°C-320°C (Patent RU2082530, IPC B21H 1/14, C22C 37/10, June 27, 1997).

This known method has a disadvantage of failing to ensure the difference between the hardness on the surface and at the core of the sphere, which results in lower wear and impact resistance; and its another disadvantage is a more complex and costly technology for heat treatment of balls, including the need to have equipment for isothermal quenching in molten salts and tempering in a conveyor quenching-tempering unit to ensure the required hardness of the balls.

In terms of technical essence, the solution that is closest to the proposed invention refers to a method for manufacturing grinding balls, which includes heating a concast billet, rolling round billets of the relevant size on the hot-rolling mill, then heating them in an induction unit, rolling them into the balls on a cross rolling mill at 950°C-1050°C, cooling the balls down to 840°C-900°C in a cooling drum with additional air supply before quenching, then tempering in the tempering drum with running water to lower the temperature of the balls to 125°C-160°C and allowing the balls to self-temper in the containers (Patent RU2596737, C21D 9/36, B21H 1/14, C21D 1/02, B23P 15/00, May 13, 2015)
This method has the following disadvantage:
- quenching is performed at the rolling temperature above the GSE line (lower part in the iron-carbon alloy diagram) [1] and involves cooling to the quenching value, which results in the formation of large austenite grains and, therefore, worsens the nature of subsequent phase transformations;
- to ensure Group 3-5 hardness of balls [2] at the unit output, it is necessary to use high-carbon high-alloyed steels (with carbon mass fraction >0.6%) as the material for billets.

The technical result provided by the invention is the higher hardness group characteristics of ball-shaped metal products, improved wear and impact resistance of such products at the unit output when they are made of low-alloy steels, and the possibility of reducing the carbon mass fraction of the steel used in the process.

According to the invention, to achieve such technical result, the method for manufacturing ball-shaped metal products, including heating, rolling, cooling, quenching, tempering of balls, consists in through heating of round billets made in appropriate size in a mid-frequency induction unit, rolling such billets into balls in a cross rolling mill at 950°C-1070°C, cooling the balls down to 620°C-700°C in a cooling drum with forced air cooling, heating the surface of the balls up to 850°C-930°C in a high-frequency induction unit that contains a rotating transport tube and multiple inductor sections, quenching the balls to 125°C-160°C in a quenching drum where they are cooled by running water, and allowing the balls to self-temper in the containers.

The essence of the present invention is as follows.

With the proposed method, after the balls are rolled and heated up to 850°C-930°C in a high-frequency induction unit, they are cooled down to 620°C-700°C and then subjected to thermal cycling, as this allows to reduce the size of austenite grains and obtain finely dispersed, quenched martensite before tempering the ball's surface which, in turn, increases the hardness of the ball's surface. Further low-temperature tempering helps to redistribute carbon in the quenched martensite and form tempered martensite. This process reduces internal stresses, while preserving high hardness and wear resistance at the same level. The combination of high surface hardness and a relatively ductile core improves the shock resistance of the ball, i.e. its ability to resist shock loads.

A high-frequency induction unit [3] contains a rotating transport tube, which is made of heat-resistant dielectric material, and located at a certain angle of inclination to the horizon, and is used to move the balls as they are being treated. The tube is located within multiple sections of inductors. This solution ensures that the moving balls are heated evenly (axisymmetrically) on their surface down to a specified depth.

Thus, the proposed method of ball manufacturing enables better wear and impact resistance of metal balls when they are made of low-alloy steels, thereby allowing to reduce the carbon mass fraction of the used steel.

### References

1. Gulyayev, A.P., Metallovedeniye / A.P. Gulyayev. - M.: Metallurgiya, 1986. - 544 s. (Gulyaev, A.P., Metallurgy / A.P. Gulyaev, Metallurgy Publishers, Moscow, 1986, 544 p., in Russian)
2. GOST 7524-2015. Mezhgosudarstvennyy standart. Shary melyushchiye stal'nyye dlya sharovykh mel'nits (GOST 7524-2015. Interstate standard. Grinding steel balls for ball mills, in Russian)
3. Patent RU2691354. Unit for inline induction axisymmetric heating of ball-shaped products / S.S. Titov, D.V. Bezdenezhnykh. (Russia); Applicant and patent holder: NPP Sistema48 Limited Liability Company (NPP Sistema48 LLC) (RU).

## Claims

1. The method for manufacturing ball-shaped metal products, which involves through heating of round billets made in appropriate size in a mid-frequency induction unit, and rolling such billets into balls in a cross rolling mill at 950°C-1070°C, quenching the balls to 125°C-160°C in a quenching drum where they are cooled by running water, and allowing the balls to self-temper in the containers, and which differs from known ones in that, after the rolling treatment, the balls are cooled down to 620°C-700°C in a cooling drum with forced air cooling and the surface of the balls is subsequently heated up to 850°C-930°C in a high-frequency induction unit containing a rotating transport tube and multiple inductor sections.
